# EUROPEAN PATENT SPECIFICATION

(11) **EP 4 156 396 B1**
(45) Date of publication and mention of the grant of the patent: **23.07.2025**
(21) Application number: 20941053.9
(22) Date of filing: 17.11.2020
(51) Int. Cl.: H01M 50/30, H01M 50/10

(54) **SECONDARY BATTERY**
SEKUNDÄRBATTERIE
BATTERIE RECHARGEABLE

(30) Priority: 15.06.2020 KR 20200072597
(43) Date of publication of application: 29.03.2023
(73) Proprietor: LG Energy Solution, Ltd., Seoul 07335 (KR)
(72) Inventor: LIM, Hun Hee, Daejeon 34122 (KR); KIM, Sang Hun, Daejeon 34122 (KR); KANG, Min Hyeong, Daejeon 34122 (KR); YU, Hyung Kyun, Daejeon 34122 (KR)
(74) Representative: Plasseraud IP
(86) International application number: PCT/KR2020/016190
(87) International publication number: WO 2021/256630

(56) References cited:
- WO-A1-2020/080325
- CN-A- 111 033 799
- JP-A- 2007 265 725
- JP-A- 2019 207 779
- JP-A- 2020 063 094
- JP-A- 2020 063 094
- KR-A- 20070 103 890
- US-A- 4 678 725
- US-A1- 2006 093 895
- US-B2- 10 680 221

## Description

### CROSS-REFERENCE TO RELATED APPLICATION

The present application claims the benefit of the priority of Korean Patent Application No. 10-2020-0072597, filed on June 15, 2020.

### TECHNICAL FIELD

The present invention relates to a secondary battery in which an electrode assembly and an electrolyte are embedded in a pouch, and more particularly, to a pouch-type secondary battery having a valve capable of discharging a gas to the outside when the gas is generated in the pouch.

### BACKGROUND ART

The demands for high-efficiency secondary batteries are rapidly increasing in the mobile device and electric vehicle fields. Among such the secondary batteries, a lithium secondary battery having high energy density, maintaining a relatively high voltage, and having a low self-discharge rate is commercially widely used, and research and development for improving performance thereof is actively being conducted.

The secondary battery has a structure in which an electrode assembly and an electrolyte are embedded in a case such as a can or a pouch. The electrode assembly has a structure in which positive electrodes, separators, and negative electrodes are repeatedly stacked. In general, the electrode assembly may be classified into a winding type electrode assembly in which the positive electrodes, the separators, and the negative electrodes, which are in the stacked state, are rolled to be embedded in the case and a stack type (stacked) electrode assembly in which the positive electrodes, the separators, and the negative electrodes, each of which is cut to a predetermined size, are stacked.

Since the winding type electrode assembly has a spirally wound structure, the winding type electrode assembly is suitable for being mounted on a cylindrical battery, but is disadvantageous in space utilization for a prismatic or pouch type battery. On the other hand, since the stack type electrode assembly is adjusted in size when the electrode and the separator are cut, the prismatic shape fitted with the case is easily obtained, but a manufacturing process is relatively complicated, and the stack type electrode assembly is relatively vulnerable to an external impact. Also, a stack & folding method has been developed to combine the advantages of the winding type and the stack type. In the stack & folding method, a C-type bicell (a bicell having a stack structure of a positive electrode/separator/negative electrode/separator/positive electrode) and an A-type bicell (a bicell having a stack structure of a negative electrode/separator/positive electrode/separator/negative electrode) are placed on a folding separator to fold the bicells, thereby manufacturing the electrode assembly.

The electrode assembly manufactured in various manners as described above is mounted in a case such as a can or a pouch.

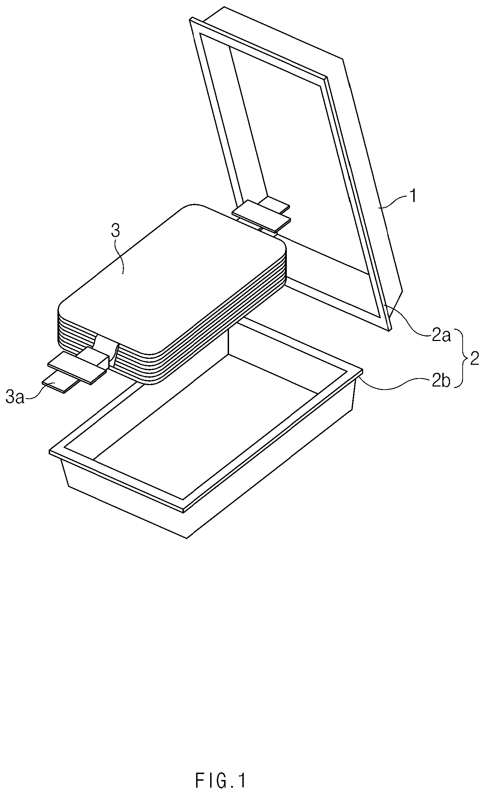

Among them, the pouch-type battery has advantages such as higher energy density per unit weight and volume, enables thinner and lighter battery, as well as a lower material cost as an exterior, and thus has been actively developed in recent years. As illustrated in FIG. 1, which illustrates a state in which an electrode assembly 3 is mounted in a state in which a pouch 1 is opened, the pouch-type secondary battery is manufactured so that the electrode assembly 3 is seated in the pouch 1 in a state in which upper and lower portions of the pouch 1 are separated from each other, and when an electrolyte is injected, sealing portions 2a and 2b formed on edges of the upper and lower portions are sealed. Here, an end of an electrode lead 3a drawn out from the electrode assembly 3 is sealed in a state of being disposed to protrude to the outside.

The pouch-type battery has a problem in that swelling occurs during the charging/discharging in the manufacturing process and during the use as a charging/discharging device after the manufacturing is performed.

Such swelling is a phenomenon in which a gas is generated inside the pouch 1 due to the vaporization of the electrolyte to deform an outer appearance of the pouch 1 and deteriorate charge/discharge performance of the secondary battery, and in severe cases, there is a risk of explosion.

Therefore, when the gas is generated inside the pouch 1, it is necessary to remove the gas to the outside.

WO 2020/080325, JP 2020/063094, US 10 680 221, US 2006/093895 and CN 111 033 799 each aim to discharge gas from inside a pouch to the outside, thereby preventing the pouch from exploding.

### DISCLOSURE OF THE INVENTION

### TECHNICAL PROBLEM

In order to solve the above-described problem, an object of the present invention is to provide a secondary battery having a valve capable of discharging a gas to the outside when the gas is generated inside a pouch to increase in internal pressure.

### TECHNICAL SOLUTION

The present invention for achieving the above-described object is defined in the set of claims and provides a secondary battery in which an electrode assembly and an electrolyte are inserted and injected into a pouch, and an edge of the pouch is sealed to form a sealing portion, the secondary battery comprising: a valve fixed to the sealing portion so that one end thereof faces the inside of the pouch, and the other end thereof faces the outside of the pouch, wherein the valve comprises: a body forming a passage having opened one end facing the inside of the pouch and provided with a chamber connected to the passage, wherein a discharge hole communicating with the outside is formed in the chamber; a gate seated on a hook protrusion forming a boundary between the passage and the chamber to open or close the passage; and a spring mounted to apply elastic force in a direction in which the gate is closed, wherein when a gas is generated inside the pouch, a pressure of the gas overcomes the elastic force of the spring, the gate is opened to discharge the gas through the discharge hole.

An O-ring may be mounted at a point of the hook protrusion, at which the gate is seated, so that sealing is achieved when the gate is closed.

A blocking film for preventing the electrolyte from being permeated may be mounted on the body at an inlet-side of the passage, and the blocking film may be torn or separated from a mounted position when a gas is generated inside the pouch to increase in internal pressure.

The blocking film may be made of a material that does not cause a chemical reaction with the electrolyte. The blocking film may be manufactured as a thin film made of polypropylene or polytetrafluoroethylene.

The blocking film may adhere to the body by using a pressure sensitive adhesive.

An auxiliary discharge hole is formed so that when the gate slides inside the chamber, air within the chamber is discharged, wherein the auxiliary discharge hole is formed at an opposite side of the discharge hole with the gate therebetween.

The gate may comprise a body seated on the hook protrusion and a pillar expanded form the body to protrude to be inserted into the passage, wherein a gasket having a ring shape may be fitted to an outer circumferential surface of the pillar to seal a gap between the outer circumferential surface of the pillar and an inner circumferential surface of the passage.

An inclined surface may be formed along a circumference of the pillar so that the gas is gradually introduced into the chamber while the pillar slides.

The valve may be disposed in parallel to an electrode lead that is drawn out from the electrode assembly to protrude out of the pouch.

The present invention may additionally provide a secondary battery module manufactured by coupling the plurality of secondary batteries having the above-described configuration to each other.

### ADVANTAGEOUS EFFECTS

In the present invention having the configuration as described above, when the gas is generated inside the pouch, and the pressure of the gas overcomes the elastic force of the spring, the gate may be opened to discharge to the discharge hole, thereby efficiently preventing the swelling from occurring and preventing the moisture and the foreign substances from being introduced from the outside of the valve.

The O-ring may be mounted at the point of the hook protrusion, at which the gate is seated, to prevent the electrolyte from leaking.

Furthermore, the blocking film may be mounted on the inlet-side of the passage to fundamentally block the introduction of the electrolyte into the valve when the pressure inside the pouch is in the normal range.

The blocking film may be made of the material that does not cause the chemical reaction with the electrolyte to prevent the electrolyte from being deteriorated in performance.

In the valve according to the present invention, the auxiliary discharge hole may be formed in the opposite side of the discharge hole to prevent the air resistance from adversely affecting the sliding of the valve.

In addition, the gasket may be fitted into the gate to prevent the gas from leaking, and the inclined surface may be formed on the pillar so that the gas is gradually discharged.

### BRIEF DESCRIPTION OF THE DRAWINGS

FIG. 1 is a perspective view illustrating a state in which an electrode assembly is mounted in a state in which a pouch is opened.
FIG. 2 is a view illustrating a state in which a valve is mounted in a secondary battery according to a first embodiment of the present invention.
FIG. 3 is a cross-sectional view (left) illustrating a state in which a gate is closed before a gas is generated in a pouch and a cross-sectional view (right) illustrating a state in which the gas is generated to open the gate by a pressure of the gas in the valve according to the first embodiment of the present invention.
FIG. 4 is a view illustrating more clearly a mounted state of a gasket in FIG. 2.
FIG. 5 is a cross-sectional view (left) illustrating a state in which a blocking film is mounted at an inlet-side of a passage and a cross-sectional view (right) illustrating a state in which the blocking film is separated from a mounted position according to a second embodiment of the present invention.

### MODE FOR CARRYING OUT THE INVENTION

Hereinafter, preferred embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein.

In order to clearly describe the present invention, parts irrelevant to the description are omitted, and the same reference numerals are assigned to the same or similar components throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

The present invention relates to a secondary battery in which an electrode assembly and an electrolyte are inserted into a pouch, and an edge of the pouch is sealed to form a sealing portion. Hereinafter, embodiments of the present invention will be described in more detail with reference to the accompanying drawings.

### First Embodiment

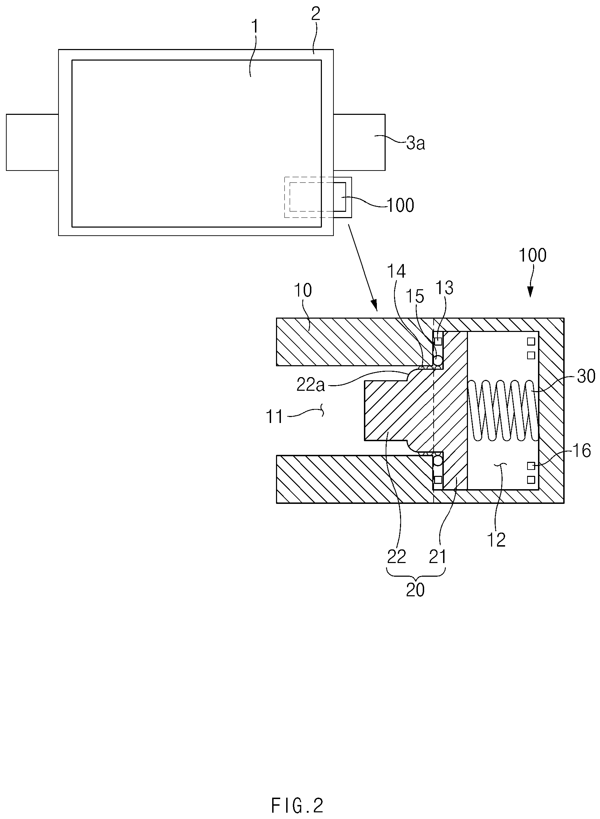

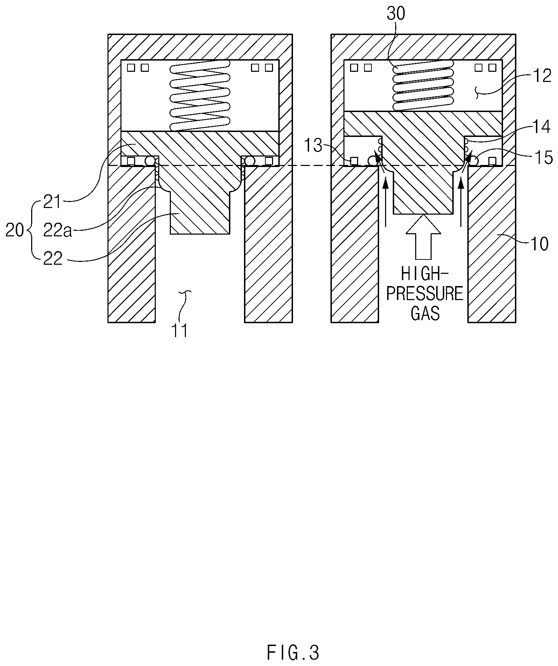

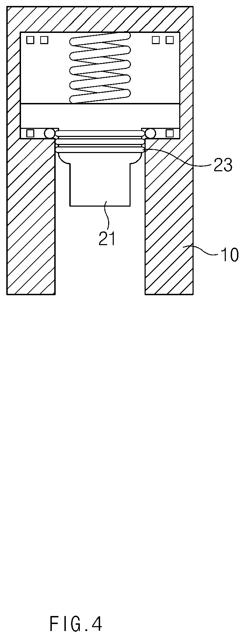

FIG. 2 is a view illustrating a state in which a valve is mounted in a secondary battery according to a first embodiment of the present invention, FIG. 3 is a cross-sectional view (left) illustrating a state in which a gate is closed before a gas is generated in a pouch and a cross-sectional view (right) illustrating a state in which the gas is generated to open the gate by a pressure of the gas in the valve according to the first embodiment of the present invention, and FIG. 4 is a view illustrating more clearly a mounted state of a gasket in FIG. 2.

Referring to the drawings, a secondary battery according to this embodiment comprises a valve 100, and the valve 100 is fixedly mounted so that one end thereof faces the inside of a pouch 1, and the other end thereof faces the outside of the pouch 1. Here, the valve 100 is disposed in parallel to an electrode lead 3a that is drawn out from the electrode assembly to protrude out of the pouch 1 at an interval.

The valve 100 has a structure in which a gate 20 is fixed to the sealing portion and mounted inside a body 10, in which a passage is formed, so that a gas is accessible.

That is, as illustrated in FIG. 3 in more detail, the body 10 has the passage having one end opened and facing the inside of the pouch 1 and the other end extending from the one end to the other side in a longitudinal direction, and the passage 11 is opened to a chamber 12.

The chamber 12 has a structure in which an end opposite to the end of the passage 11 is blocked, and a discharge hole 13 is formed so as to communicate with the outside in a portion of a sidewall. The valve 100 is fixed to the sealing portion in a state in which the discharge hole 13 is exposed to the outside. The body 10 is made of a metal, ceramic, a synthetic resin, or the like having excellent chemical resistance.

Also, the gate 20 is seated on a hook protrusion forming a boundary between the passage 11 and the chamber 12 to open or close the passage 11. The hook protrusion is a boundary point formed by a difference between an inner diameter of the passage 11 and an inner diameter of the chamber 12, and the gate 20 is mounted to shield the hook protrusion in the chamber 12.

The gate 20 is connected to a spring 30 so that elastic force acts in a direction in which the gate 20 is closed. The spring 30 is a compression spring that resists compression force and has one end fixed to a wall surface (disposed at an opposite side of the passage) of the chamber 12 and the other end fixed to the gate 20.

Thus, the gate 20 is opened only when force that overcomes the elastic force of the spring 30 is applied.

Also, an O-ring 15 is mounted at a point of the hook protrusion, at which the gate 20 is seated, so that sealing is achieved when the gate 20 is closed. When the gate 20 is closed, the O-ring 15 is pressed by the elastic force of the spring 30 and thus is elastically deformed to seal a gap that may occur between the gate 20 and the body 10.

Furthermore, an auxiliary discharge hole 16 is additionally formed so that air in the chamber 12 is discharged when the gate 20 slides inside the chamber 12. Since the auxiliary discharge hole 16 is formed at an opposite side of the discharge hole 13 with the gate 20 therebetween, when a space in which the spring 30 is disposed is contracted, the air may be discharged to the outside before being compressed prevent the sliding of the gate 20 from being disturbed by air resistance.

The gate 20 according to this embodiment comprises a disk-shaped body 21 that is seated on the hook protrusion and a cylindrical pillar 22 that is expanded from the body 21 to protrude to be inserted into the passage 11.

The body 21 shields a gap between the passage 11 and the chamber 12 when the gate 20 is in a closed state, and the pillar 22 extends from the body 21 so as to be inserted into the passage 11, thereby guiding the sliding of the body 21.

Furthermore, the pillar 21 has an inclined surface 22a along a circumference of the pillar 21 so that the gas is gradually introduced into the chamber 12 while the pillar 21 slides, and a contact area increases when the gas is introduced into the passage 11 to concentrate a pressure. The inclined surface 22a may be formed as a plane inclined at a predetermined angle or may be formed in a convexly rounded curved surface along the circumference of the pillar 22.

In addition, as more clearly illustrated in FIG. 4, a plurality of ring-shaped gaskets 23 may be fitted on an outer circumferential surface of the pillar 11 so as to be sealed between the outer circumferential surface of the pillar 11 and an inner circumferential surface of the passage 11.

Therefore, when the gas is in a normal pressure range before a gas is generated inside the pouch 1, the gate 20 shields the passage 11 by the elastic force of the spring 30 as illustrated in the left drawing of FIG. 3.

And, when the gas is generated inside the pouch 1 to increase in pressure inside the pouch 1, the gas pressure overcomes the elastic force of the spring 30 to push the gate 20, and thus, the gas is introduced into the chamber 12 as illustrated in the right drawing of FIG 3 and then is discharged to the outside through the discharge hole 13. Here, an opening valve pressure of the gate 20, at which the gate is opened, may be variously set by adjusting the elastic force of the spring 30.

Furthermore, when the gate 20 is opened by frictional force generated between the gate 20 and the body 10 and frictional force generated between the gasket 23 and the body 10, the opening may be maintained even though a pressure is slightly lower than the applied pressure to efficiently discharge the gas (for example, when the gas pressure is 0.1 Mpa, if the gate is opened, the gas is discharged to the outside to decrease in gas pressure, and thus, the gate is set so as not to be closed even when the gas pressure is 0.1 Mpa, but to be closed at a pressure of about 0.05 Mpa.

Also, a lubricant and vacuum grease may be additionally applied to the contact portion between the body 10 and the gate 20 to reduce sealing properties and the frictional force, and the lubricant and vacuum grease may be selected from materials that do not react with the electrolyte.

### Second Embodiment

In this embodiment, a valve to which a blocking film 40 that shields a passage 11 in a body 10 of the valve 100 according to the first embodiment is additionally attached.

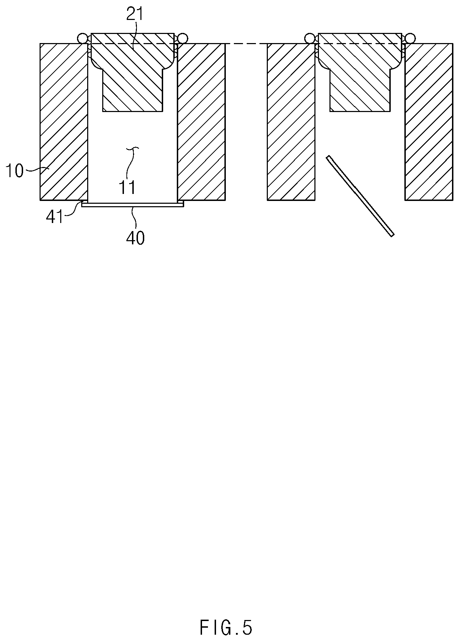

FIG. 5 is a cross-sectional view (left) illustrating a state in which a blocking film is mounted at an inlet-side of a passage and a cross-sectional view (right) illustrating a state in which the blocking film is separated from a mounted position according to a second embodiment of the present invention.

Referring to FIG. 5, the blocking film 40 for preventing an electrolyte from being permeated may be mounted on an inlet-side of the passage 11 in the body 10.

The blocking film 40 is provided to prevent a gas and electrolyte from being unnecessarily introduced into the passage 11 before an internal pressure of the pouch 1 increases.

The blocking film 40 may be configured to be torn or separated from the mounted position when a gas is generated inside the pouch 1 to increase in the internal pressure.

The blocking film 40 is not limited to a specific material as long as the material does not cause a chemical reaction with the electrolyte, but is preferably a material that is capable of being easily torn according to a change in pressure. Alternatively, even if the material is not sensitive to the pressure change, the blocking film 40 may be mounted by adjusting sensitivity of an adhesive 41 by which the blocking film 40 adheres to prevent the blocking film 40 from being separated.

The blocking film 40 according to the present invention is manufactured as a thin film made of polypropylene or polytetrafluoroethylene.

Also, a pressure sensitive adhesive may be used as the adhesive 41 adhering to the blocking film.

In the present invention having the configuration as described above, when the gas is generated inside the pouch 1, and the pressure of the gas overcomes elastic force of a spring 30, the gate 20 may be opened to discharge to a discharge hole 13, thereby efficiently preventing swelling from occurring and preventing moisture and the foreign substances from being introduced from the outside of the valve 100.

An O-ring 15 may be mounted at a point of the hook protrusion, at which the gate 20 is seated, to prevent the electrolyte from leaking.

Furthermore, the blocking film 40 may be mounted on an inlet-side of a passage 11 to fundamentally block introduction of the electrolyte into the valve 100 when the pressure inside the pouch 1 is in the normal range.

The blocking film 40 may be made of a material that does not cause a chemical reaction with the electrolyte to prevent the electrolyte from being deteriorated in performance.

In the valve 100 of the present invention, an auxiliary discharge hole 16 may be formed in an opposite side of the discharge hole 13 to prevent air resistance from adversely affecting sliding of the valve 100.

In addition, a gasket 23 may be filled into the gate 20 to prevent a gas from leaking, and an inclined surface 22a may be formed on a pillar 22 to allow the gas to be gradually discharged.

### [Description of the Symbols]

- 10:: Body
- 11:: Passage
- 12:: Chamber
- 13:: Discharge hole
- 14:: Gasket
- 15:: O-ring
- 16:: Auxiliary discharge hole
- 20:: Gate
- 21:: Body
- 22:: Pillar
- 30:: Spring
- 40:: Blocking film
- 100:: Valve

## Claims

1. A secondary battery in which an electrode assembly and an electrolyte are inserted and injected into a pouch, and an edge of the pouch is sealed to form a sealing portion, the secondary battery comprising:
a valve (100) fixed to the sealing portion so that one end thereof faces the inside of the pouch, and the other end thereof faces the outside of the pouch,
wherein the valve (100) comprises:
a body (21) forming a passage (11) having opened one end facing the inside of the pouch and provided with a chamber (12) connected to the passage (11), wherein a discharge hole (13) communicating with the outside is formed in the chamber (12);
a gate (20) seated on a hook protrusion forming a boundary between the passage (11) and the chamber (12) to open or close the passage (11); and
a spring (30) mounted to apply elastic force in a direction in which the gate (20) is closed,
wherein the gate (20) is configured to be opened to discharge the gas through the discharge hole (13) when a gas is generated inside the pouch so that a pressure of the gas overcomes the elastic force of the spring (30), and
wherein an auxiliary discharge hole (16) is formed so that when the gate (20) slides inside the chamber (12), air within the chamber (12) is discharged,
wherein the auxiliary discharge hole (16) is formed at an opposite side of the discharge hole (13) with the gate (20) therebetween.

2. The secondary battery of claim 1, wherein an O-ring (15) is mounted at a point of the hook protrusion, at which the gate (20) is seated, so that sealing is achieved when the gate (20) is closed.

3. The secondary battery of claim 1, wherein a blocking film (40) for preventing the electrolyte from being permeated is mounted on the body (21) at an inlet-side of the passage (11), and
the blocking film (40) is torn or separated from a mounted position when a gas is generated inside the pouch to increase in internal pressure.

4. The secondary battery of claim 3, wherein the blocking film (40) is made of a material that does not cause a chemical reaction with the electrolyte.

5. The secondary battery of claim 4, wherein the blocking film (40) is manufactured as a thin film made of polypropylene or polytetrafluoroethylene.

6. The secondary battery of claim 3, wherein the blocking film (40) adheres to the body (21) by using a pressure sensitive adhesive.

7. The secondary battery of claim 1, wherein the gate (20) comprises a body (10) seated on the hook protrusion and a pillar (22) expanded form the body (10) to protrude to be inserted into the passage (11),
wherein a gasket (14) having a ring shape is fitted to an outer circumferential surface of the pillar (22) to seal a gap between the outer circumferential surface of the pillar (22) and an inner circumferential surface of the passage.

8. The secondary battery of claim 7, wherein an inclined surface is formed along a circumference of the pillar (22).

9. The secondary battery of claim 1, wherein the valve (100) is disposed in parallel to an electrode lead that is drawn out from the electrode assembly to protrude out of the pouch.

10. A secondary battery module manufactured by coupling the plurality of secondary batteries of any one of claims 1 to 9 to each other.

## Patentansprüche

1. Sekundärbatterie, in welcher eine Elektrodenanordnung und ein Elektrolyt in einen Beutel eingeführt und eingespritzt sind, und wobei ein Rand des Beutels abgedichtet ist, um einen Dichtungsabschnitt zu bilden, wobei die Sekundärbatterie umfasst:
ein Ventil (100), welches an dem Dichtungsabschnitt fixiert ist, so dass ein Ende davon dem Inneren des Beutels zugewandt ist und das andere Ende davon dem Äußeren des Beutels zugewandt ist,
wobei das Ventil (100) umfasst:
einen Körper (21), welcher einen Durchgang (11) bildet, welcher ein geöffnetes Ende aufweist, welches dem Inneren des Beutels zugewandt ist, und welcher mit einer Kammer (12) bereitgestellt ist, welche mit dem Durchgang (11) verbunden ist, wobei ein Ablassloch (13), welches mit dem Äußeren kommunizierend verbunden ist, in der Kammer (12) gebildet ist;
eine Sperre (20), welche an einem Hakenvorsprung sitzt und eine Grenze zwischen dem Durchgang (11) und der Kammer (12) bildet, um den Durchgang (11) zu öffnen oder zu schließen; und
eine Feder (30), welche montiert ist, um eine elastische Kraft in einer Richtung auszuüben, in welcher die Sperre (20) geschlossen ist,
wobei die Sperre (20) dazu eingerichtet ist, geöffnet zu werden, um das Gas durch das Ablassloch (13) abzulassen, wenn ein Gas im Inneren des Beutels erzeugt wird, so dass ein Druck des Gases die elastische Kraft der Feder (30) überwindet, und
wobei ein Hilfsablassloch (16) gebildet ist, so dass Luft innerhalb der Kammer (12) abgelassen wird, wenn die Sperre (20) in das Innere der Kammer (12) schiebt,
wobei das Hilfsablassloch (16) an einer entgegengesetzten Seite des Ablasslochs (13) mit der Sperre (20) dazwischen gebildet ist.

2. Sekundärbatterie nach Anspruch 1, wobei ein O-Ring (15) an einer Stelle des Hakenvorsprungs montiert ist, an welcher die Sperre (20) sitzt, so dass ein Abdichten erreicht wird, wenn die Sperre (20) geschlossen ist.

3. Sekundärbatterie nach Anspruch 1, wobei ein Blockierfilm (40) zum Verhindern eines Durchdringens des Elektrolyts an einer Einlassseite des Durchgangs (11) an dem Körper (21) montiert ist, und
der Blockierfilm (40) aus einer montierten Position gerissen oder getrennt wird, wenn ein Gas im Inneren des Beutels erzeugt wird, um einen internen Druck zu erhöhen.

4. Sekundärbatterie nach Anspruch 3, wobei der Blockierfilm (40) aus einem Material hergestellt ist, dass keine chemische Reaktion mit dem Elektrolyten verursacht.

5. Sekundärbatterie nach Anspruch 4, wobei der Blockierfilm (40) als ein Dünnfilm gefertigt ist, welcher aus Polypropylen oder Polytetrafluorethylen hergestellt ist.

6. Sekundärbatterie nach Anspruch 3, wobei der Blockierfilm (40) an dem Körper (21) durch Verwendung eines drucksensitiven Haftmittels anhaftet.

7. Sekundärbatterie nach Anspruch 1, wobei die Sperre (20) einen Körper (10), welcher an dem Hakenvorsprung sitzt, und eine Säule (22) umfasst, welche sich von dem Körper (10) erstreckt, um zum Einführen in den Durchgang (11) hervorsteht,
wobei eine Dichtung (14), welche eine Ringform aufweist, auf eine äußere Umfangsfläche der Säule (22) angepasst ist, um einen Spalt zwischen der äußeren Umfangsfläche der Säule (22) und einer inneren Umfangsfläche des Durchgangs abzudichten.

8. Sekundärbatterie nach Anspruch 7, wobei eine geneigte Fläche entlang eines Umfangs der Säule (22) gebildet ist.

9. Sekundärbatterie nach Anspruch 1, wobei das Ventil (100) parallel zu einer Elektrodenleitung angeordnet ist, welche aus der Elektrodenanordnung herausgezogen ist, um aus dem Beutel hervorzustehen.

10. Sekundärbatteriemodul, welches durch Koppeln der Mehrzahl von Sekundärbatterien nach einem der Ansprüche 1 bis 9 miteinander gefertigt ist.

## Revendications

1. Batterie secondaire dans laquelle un ensemble d'électrodes et un électrolyte sont insérés et injectés dans une poche, et un bord de la poche est scellé pour former une portion d'étanchéité, la batterie secondaire comprenant :
une soupape (100) fixée à la portion d'étanchéité de sorte qu'une extrémité de celle-ci soit orientée vers l'intérieur de la poche, et l'autre extrémité de celle-ci vers l'extérieur de la poche,
dans laquelle la soupape (100) comprend :
un corps (21) formant un passage (11) ayant ouvert une extrémité orientée vers l'intérieur de la poche et pourvu d'une chambre (12) reliée au passage (11), dans laquelle un orifice d'évacuation (13) communiquant avec l'extérieur est formé dans la chambre (12) ;
une grille (20) assise sur une saillie de crochet formant une limite entre le passage (11) et la chambre (12) pour ouvrir ou fermer le passage (11) ; et
un ressort (30) monté pour appliquer une force élastique dans une direction dans laquelle la grille (20) est fermée,
dans laquelle la grille (20) est conçue pour être ouverte pour évacuer le gaz à travers l'orifice d'évacuation (13) lorsqu'un gaz est généré à l'intérieur de la pochpe de sorte qu'une pression du gaz surmonte la force élastique du ressort (30), et
dans laquelle un orifice d'évacuation auxiliaire (16) est formé de sorte que lorsque la grille (20) coulisse à l'intérieur de la chambre (12), l'air à l'intérieur de la chambre (12) est évacué,
dans laquelle l'orifice d'évacuation auxiliaire (16) est formé sur un côté opposé de l'orifice d'évacuation (13) avec la grille (20) entre les deux.

2. Batterie secondaire selon la revendication 1, dans laquelle un joint torique (15) est monté à un point de la saillie de crochet, au niveau duquel la grille (20) est positionnée, de sorte que l'étanchéité est obtenue lorsque la grille (20) est fermée.

3. Batterie secondaire selon la revendication 1, dans laquelle un film de blocage (40) pour empêcher la perméation de l'électrolyte est monté sur le corps (21) au niveau d'un côté d'entrée du passage (11), et
le film de blocage (40) est déchiré ou séparé d'une position montée lorsqu'un gaz est généré à l'intérieur de la poche pour augmenter la pression interne.

4. Batterie secondaire selon la revendication 3, dans laquelle le film de blocage (40) est constitué d'un matériau qui ne provoque pas de réaction chimique avec l'électrolyte.

5. Batterie secondaire selon la revendication 4, dans laquelle le film de blocage (40) est fabriqué sous forme de film mince en polypropylène ou polytétrafluoroéthylène.

6. Batterie secondaire selon la revendication 3, dans laquelle le film de blocage (40) adhère au corps (21) à l'aide d'un adhésif sensible à la pression.

7. Batterie secondaire selon la revendication 1, dans laquelle la grille (20) comprend un corps (10) assis sur la saillie de crochet et un pilier (22) déployé depuis le corps (10) pour faire saillie pour être inséré dans le passage (11),
dans laquelle un joint (14) ayant une forme d'anneau est monté sur une surface circonférentielle externe du pilier (22) pour sceller un espace entre la surface circonférentielle externe du pilier (22) et une surface circonférentielle interne du passage.

8. Batterie secondaire selon la revendication 7, dans laquelle une surface inclinée est formée le long d'une circonférence du pilier (22).

9. Batterie secondaire selon la revendication 1, dans laquelle la soupape (100) est disposée parallèlement à un fil d'électrode qui est tiré hors de l'ensemble d'électrodes pour faire saillie hors de la poche.

10. Module de batterie secondaire fabriqué en couplant entre elles la pluralité de batteries secondaires selon l'une quelconque des revendications 1 à 9.
